# EUROPEAN PATENT SPECIFICATION

(11) **EP 3 970 937 B1**
(45) Date of publication and mention of the grant of the patent: **11.12.2024**
(21) Application number: 21197299.7
(22) Date of filing: 17.09.2021
(51) Int. Cl.: B29B 17/04, B29C 48/00, B29C 48/76

(54) **METHOD OF PRODUCING A COMPOSITE**
VERFAHREN ZUR HERSTELLUNG EINES VERBUNDWERKSTOFFS
PROCÉDÉ POUR LA PRODUCTION D'UN COMPOSITE

(30) Priority: 17.09.2020 CZ 20200516
(43) Date of publication of application: 23.03.2022
(73) Proprietor: Via Alta a.s., 67521 Okrisky (CZ)
(72) Inventor: John, Jakub, 67401 Trebic; Kremlackova 455 (CZ); Kois, Jiri, 58601 Jihlava; Brezinova 11 (CZ); Speta, Jiri, 67401 Trebic; Brnenska 32 (CZ); Novacek, Milan, 67529 Knezice; Knezice 313 (CZ); Kresa, Jakub, 67401 Trebic; Polanka 321/11 (CZ)
(74) Representative: Dadej, Leopold

(56) References cited:
- EP-A1- 3 175 968
- WO-A1-2010/128853
- WO-A1-2012/083972
- DE-A1- 19 710 895

## Description

### Technical Field

The invention relates to composite materials, in particular building and construction materials, based on waste thermoplastics as binders in mixture with other waste materials as fillers, for example recycled glass, recycled glass from photovoltaic panels, recycled rubber from tyres, recycled ceramics, mixed building and demolition waste, concrete, ash, and slag, and other similar waste materials. Furthermore, it also relates to a method of production of these composites, which comprises grinding, drying, preheating, homogenisation, melting, and final shape treatment of the components. Finally, it relates to a device for performing these methods, that is, for preparation of a bulk charge, which is used for production of filled polymer composite mixtures, in particular for utilizing waste, wherein the charge consists of two dominant input raw materials that are weighed by batchers and further dried, preheated, and mixed and finally melted in an extruder to extrude a homogeneous composite mixture for shape finalization.

### Background of the Invention

In production of polymer-based composite materials, new unused thermosetting two-component binders, based mainly on epoxy resins, or pure thermoplastic mass, especially polyolefins, have been used. There are no known solutions in the field of utilizing waste thermoplastics as binders and recycled glass from photovoltaic panels or other materials as fillers. Currently, composite building and construction materials are produced using hydraulic or pure polymer binders and fillers based on natural aggregates. A disadvantage of this solution is the use of non-renewable resources and the consumption of large amounts of energy for the treatment or production thereof. Another disadvantage of conventionally used composite materials is represented by some of their utility properties that limit their use in outdoor environments, such as frost resistance and resistance to chemical and de-icing agents.

Due to the newness of the composite composition, only general processes for production of similar materials are known, which need to be modified. DE 197 10 895 Al discloses an examplary conventional process. For technological reasons, it is necessary to dry the input raw materials of the mixture, and to minimise the energy consumption of the process, it is preferable to prepare a preheated charge, because the downstream technological process operates at higher temperatures (in the order of hundreds of °C) and no energy has to be spent on its reheating for subsequent processing.

The same applies to device for their production that is partially usable from other production processes and needs to be modified. Conventional mixing machines guarantee satisfactory homogenisation but do not offer a comprehensive solution for drying and tempered mixing. The machine design is not dimensioned for use at higher operating temperatures.

### Summary of the Invention

The invention is set out in the independent claims.

The object of the invention is method of production of a composite material for production of building and construction prefabricates, based on waste thermoplastics such as binders and with recycled glass, in particular from photovoltaic panels, with recycled rubber from tyres, from recycled ceramics, mixed building and demolition waste, concrete, ash, and slag, and from other similar waste materials as fillers. The composite contains 10 to 90 % by weight of waste thermoplastic binder in grain size of 1 to 20 mm, 10 to 90 % by weight of photovoltaic panel glass in grain size of 1 to 10 mm and 0 to 5 % by weight of an iron-based stabilising additive. The composite material is processed at temperatures between 50 and 300 °C. The waste glass from photovoltaic panels is composed of ground glass that has been cut off or removed from the photovoltaic panel. The composite material can also be recycled by re-crushing it and adding it back into the composite material production technology.

In general, the composite based on waste thermoplastics made by the method of the invention consists of 10 to 90 % by weight of waste thermoplastic binder, one-component, or a mixture thereof, in grain size up to 20 mm, and 10 to 90 % by weight of a filler selected from a group comprising recycled waste and container glass, or recycled glass from photovoltaic panels, sand, gravel, recycled tyre rubber, recycled ceramics, mixed building and demolition waste, concrete, slag, ash, or a mixture thereof, in grain size of up to 10 mm, and 0 to 5 % by weight of stabilising additive and/or dyes.

In general, the filler content may be less than 10 % by weight, for example 5-90 %, preferably 5-75 %. The thermoplastic content can then be higher than 90 %, for example 20-95 %. The method disclosed below is the subject of the invention used for production of the composite having such a composition. For illustrative reasons, a device which may be used to perform said method and is not the subject of the invention, is described below. A lower filler content will provide a more flexible composite, while a higher filler content will provide a harder and stiffer composite.

The method of production of the composite consists of first crushing the raw materials into input fractions of binder 1 to 20 mm and filler 1 to 10 mm after cleaning, if necessary, followed by drying and preheating the raw materials to a temperature of 50 to 300, preferably 50 to 90 °C, then the individual fractions are mixed and the mixture is homogenised, followed by melting of the mixture in an extruder at a temperatures of 80 to 350 °C, wherein the molten mixture is subsequently batched into a press mould, for example in a pressing device, where it is pressed into its final shape and finally cooled.

Washing and/or cleaning in the washer-cleaner can be performed optionally depending on the degree of contamination. This may be followed, as necessary, by penetration in a penetrator, followed by drying and slight preheating of the input raw materials below the melting temperature of the processed thermoplastics, in one dryer or in subdryers for individual components of the composite, and thus moisture is removed from the material. The raw materials are then crushed in a grinder into input fractions of binder up to 20 mm and filler up to 10 mm, followed by batching of the individual fractions with the batcher. The batched fractions are then dried and preheated to a temperature of 50 to 300 °C, after which the individual fractions are simultaneously mixed and the mixture is homogenised in a homogeniser, from which the mixture is passed to the extruder, where the mixture is melted at a temperature of 80 to 350 °C, wherein the molten mixture is simultaneously or subsequently compressed and batched into a device with a final volume and shape treatment.

The mixture may proceed from the extruder either to the first extrusion device, then it is separated, or to the second casting device to the first moulds, or to the press to the second moulds, or to the first rolling mill, then it is separated and cooled, or it is pulled from the melt in the form of filament in the third filament pulling device and then the product is cooled, or the resulting product after partial cooling is pulled through the second pulling mill to the resulting profile shape.

For the method of production of the composite material, a device for cleaning or washing of the charge material, if necessary, or removal of dust, and subsequent drying in a contact dryer with one mixing rotor for intensive drying of at least one input raw material, preferably followed by a two-rotor counter-rotating tempered homogeniser for mixing a mixture of at least two bulk raw materials, can be used. The contact dryer and the two-rotor tempered homogeniser are provided with a double wall for a flue gas supply for drying and heating the raw material, and at the same time they are provided with a pipe for exhausting the water vapours to the integrated water vapour exhaust. The dryer is preceded by batchers located above the dryer and homogeniser areas and placed over the weight sensors. The first batcher operates the dryer. The hopper is emptied by a mechanical flap. The dried dryer charge is transported to the homogeniser. The second batcher operates the homogeniser, where it weighs the second input raw material. The homogeniser mixes the raw materials with heat exchange between the individual components of the production mixture. The resulting product is emptied by a mechanical flap and rotation of the rotors of the homogeniser. The generation of the water vapour is extracted from the working areas by an integrated water vapour exhaust.

The device for production of composite material can therefore consist successively of at least one washer-cleaner, at least one penetrator, furthermore, at least one dryer with preheating for each of the components of the composite mixture, furthermore, at least one grinder for crushing and grinding the raw materials to the input fraction size, furthermore, at least one raw material fraction batcher provided with a first discharge flap, furthermore, at least one at least one-rotor tempered homogeniser for homogenising the raw materials, followed by at least one-rotor extruder for melting the mixture, and a second batcher for batching the mixture into the device with a final volume and shape treatment.

The composite material production device may be, after the extruder, provided with a first extrusion device with a separating device, or a second casting device into a first mould, or a press for pressing the product into a second pressing mould, or a first rolling mill with a separating device, or a third device for pulling the filament, or a second pulling mill followed by cooling.

Each one of the continuous contact hot-air dryers of the device may be provided with a system for circulating air and/or flue gas to dry and preheat the raw material, inside and/or outside the drying area.

The tempered homogeniser may be provided with rotating blades or a screw.

A melting extruder can consist of at least one working section and at least one working segment, wherein it is usually made up of three sections, namely feeding, compression-melting, and transport-melting and three segments, wherein the extruder consists of a working portion composed of at least one hollow cylindrical stator and at least one cylindrical rotor, composed of at least one segment with at least one constant and/or variable pitch working section, namely a feeding and/or compression and/or melting and/or transport section, wherein the stator is provided with a filling hopper at its input end and is provided with at least one regulated heating element along its length, wherein the stator cavity has continuously the same cross-section, or is graded or continuously tapered, and the rotor is provided at its input end with a regulated drive provided with a bearing and is provided along its length on its outer surface with a helix having one constant or gradually finer pitch, or it is successively provided with multiple helices of finer pitches, wherein at the output end the rotor is mounted loosely, wherein the helix is continuous or is composed of blades and the extruder is provided at the output end with an extrusion head and a second controlled flap for batching the mixture.

The rotor of the extruder preferably consists of several parts provided with a helix of progressively finer pitch.

For example, the extruder is composed of a stator portion and a rotor portion. The stator consists of a working portion composed of a hollow cylinder, which is provided with a filling hopper at its input end and along its length are provided regulated heating segments. The rotor is provided with a regulated drive provided with a bearing at the input end, and along its length it is provided with a helix on the outer surface with one gradually finer pitch, or successively multiple finer pitches. At the output end, the rotor is mounted loosely. The extruder is provided with an extrusion head and a controlled flap at the output end. The placement of the extruder allows tilting of the working axis of the machine.

An advantage of this invention is the maximum possibility of processing otherwise difficult-to-dispose-of waste thermoplastics and other municipal and industrial waste, wherein a firm composite material is produced, which can be used, for example, in the building industry.

The composite made by the method of the invention thus preferably contains 20-95 % of a thermoplastic binder with grain size of up to 20 mm, which may be one-component, i.e., composed of one type of a thermoplastic, or, more preferably, may be multi-component, i.e., composed of a mixture of different thermoplastics. Although multi-component thermoplastics are more difficult to process by default, they are cheaper as a waste raw material because there is no need to sort the plastic waste according to the composition of the individual thermoplastics. The composite material made by the method of the invention preferably contains 5-75 % of the filler with grain size of up to 10 mm, preferably up to 8 mm, which contains glass, e.g., recycled waste and container glass, or recycled glass from photovoltaic panels, automotive glass, etc., sand, gravel, recycled tyre rubber, recycled ceramics, mixed building and demolition waste, concrete, slag, ash, or a mixture thereof. In general, the filler may be any material with the specified grain size and with a firm, stable grain, e.g., sufficiently firm not to disintegrate during pressing, in particular preferably sand, aggregate, glass, building recyclates, bottom ash or slag. Thus, the filler may be, for example, only one of the materials mentioned, or a combination of some or all of them, in any ratio by weight. Materials that have no other suitable use, such as automotive glass or glass from solar panels, which cannot be recycled as efficiently as, for example, container glass, are particularly preferably used. Furthermore, the composite may comprise optional components such as stabilising additives, e.g., additives containing ferric oxide to increase UV resistance, dyes, flame retardants, etc. Furthermore, the composite may contain, for example, up to 5 % impurities, such as small pieces of metal and other non-meltable impurities, preferably not exceeding 8-10 mm. The binder may comprise, for example, polyolefins, polypropylene, polyethylene, PET, etc. A fundamental advantage of the composite made by the method of the invention is the possibility of using waste raw materials which are difficult to recycle or completely non-recyclable in the state of the art. The resulting composite is firm and durable enough to be used, for example, as a building material.

A binder content of a certain grain size means that the composite was produced from a binder of that grain size, i.e., the grain size of the binder before melting is given. The filler retains the grain size of the original raw material even in the resulting composite.

Preferably, the composite made by the method of the invention, regardless of its particular composition, does not comprise any adhesive or other non-thermoplastic binder.

Preferably at least half of the weight of the filler is composed of a filler with grain size of at least 0.1 mm. In other words, the so-called dust component with grain size of less than 0.1 mm forms smaller part of the filler (by weight) than the component with larger grain size. The grain size is normally measured as the largest dimension of the grains. Such limited proportion of the dust component results in a firmer resulting composite. The grain size of the filler may be, for example, in an interval of 1-8 mm, preferably for at least half of the weight of the filler.

The object of the invention, which also overcomes to some extent the shortcomings of the solutions known from the state of the art, is furthermore a method of production of a composite having the above-described, and possibly other arbitrary, composition. The method comprises delivering the input raw materials comprising a thermoplastic binder having grain size of up to 20 mm, a filler having grain size of up to 10 mm and optional additional components, wherein it further comprises the following successive steps of: the step of drying the input raw materials in at least one dryer, i.e., the drying may be carried out for all the raw materials (e.g., both the binder and the filler) simultaneously, but it can also be carried out for each component separately, either only separately for the binder and separately for the filler, or, for example, also separately for the individual types of filler, e.g., glass and ash; furthermore, the step of preheating the raw materials below the melting temperature of the binder, e.g., to 50-80 °C, more preferably 60-80 °C, more preferably 60-75 °C; and the step of homogenising the raw materials in a homogeniser, i.e., mixing them thoroughly. The homogeniser preferably maintains the temperature of the raw materials to which they have been preheated. Preferably, the homogenisation of the raw materials is performed until they are delivered to the next step. Subsequently, the raw materials (dried, preheated, and homogenised) are transported to the extruder, wherein in the extruder a part of the homogenised raw materials (in particular the binder) is melted to form a molten mixture, wherein the molten mixture is subsequently degassed and is delivered to the device for final volume and shape treatment of the composite. The extruder preferably performs not only the melting and transport of the mixture, but also its compression, given that the mass per volume (kg·m⁻³) of the mixture before melting is typically significantly lower than after it. For example, before the binder is melted, the mass per volume may be about 300 kg·m⁻³, while after melting it may be about 1,500 kg·m⁻³.

The degassing is preferably carried out in such a way that the molten mixture is led from the extruder or in a portion of the extruder through an open space, i.e., in particular through a space with access to air from the external environment, so that the vapours from the mixture can exit and be subsequently ventilated. For example, the degassing may be carried out by transport on a belt conveyor or a screw conveyor or the molten mixture may fall freely from the extruder or a portion thereof into another portion, another extruder or conveyor, etc. In principle, it is also possible to use, for example, degassing by means of a valve in the extruder, however, in view of the significantly variable viscosity of the molten mixture, the use of valves may not be very suitable. The device for final volume and shape treatment of the composite may be adapted, for example, for casting the molten mixture, pressing, extruding, etc. Furthermore also for example for cooling, cutting, etc.

The drying step preferably comprises passing the air through the given input raw material, i.e., one of the raw materials, some of the raw materials, or all the input raw materials simultaneously, and removal of this air. For example, the dryer performing this step comprises a fan and air heating device, e.g., a boiler and a radiator. Preferably, the drying further comprises dedusting the air prior to its removal, wherein the dust captured during the dedusting is subsequently returned to the input raw materials. This prevents the discharge of dust particles into the atmosphere, for example by filtering the air carrying moisture away from the input raw materials. It is also possible to perform the dedusting without returning the captured dust back to any of the method steps. This may be preferable, for example, if the content of the dust component of the filler at the input exceeds the preferred 50 % by weight of the filler as mentioned above, so it is desirable to remove some of the dust component to improve the properties of the composite. However, it is more preferable to use this return such that the dust does not have to be handled in another manner.

Furthermore, the method may be preceded by a step of grinding the input raw materials to a specified grain size. The input to the method of the invention can therefore be already ground material but also material not ground, wherein then the method comprises a step of grinding or otherwise carried out pulverization of the input materials.

These steps may be preceded, for example, by a step of sorting the input raw materials, e.g., to remove larger pieces of metal, wood, etc., performed, for example, by a magnetic separator or even manually. In particular, this step can protect the grinder or extruder from damage by larger pieces of hard material. A more thorough cleaning of the input materials is also possible, but it is preferably not necessary for the method of the invention, so that neither the moisture of the material nor the cost for the preparation of the material is increased.

The drying step is preferably followed by a step of heat recovery from the removed air. More preferably, this heat is used in the method of the invention, for example to preheat the air for drying, before it is heated by e.g., radiators, to reduce the energy, and thus the cost, demand of the method. However, it is also possible to use the heat from heat recovery elsewhere, e.g., for heating or another industrial process. The heating of the air for drying and preferably also the heating of the homogeniser keeping the raw materials at the preheated temperature after drying upstream of the extruder is preferably carried out by a water-air heat exchanger. Water heating can be performed by a boiler, e.g., solid fuel or natural gas-fired, or it can be water from a heating plant or other industrial process providing waste heat. However, it is also possible to use a radiant heat source, e.g., an electric heating element.

The method of the invention may preferably be a continuous method, wherein all steps take place simultaneously, so that, for example, material is continuously delivered to the dryer for drying and from the dryer the material continuously proceeds to homogenisation, etc. in the other steps. However, it is also possible to carry out the method of the invention as a batch method, where, for example, the next batch of materials to be dried can only be delivered to the dryer after the previous, dried batch has left the dryer.

The melting of the mixture is preferably carried out at a temperature of 70-350 °C, more preferably 70-260 °C, more preferably 80-350 °C, even more preferably 80-260 °C, and even more preferably 80-180 °C. The temperature for melting, and thus the temperature of the molten mixture when passing through the extruder, depends in particular on the composition of the binder. It is preferably selected so that none of the thermoplastics forming the binder are destroyed by excessive temperature. More preferably, it is also selected such that all the thermoplastics contained are melted. For example, for a binder composed of a PVC material, a lower temperature in the specified range may be selected, for example 80 °C. For PET, a temperature of around 260 °C may be selected.

The method of production according to the invention preferably further comprises:
- A step of pressing at least partially performed by the device for final volume and shape treatment; and/or
- A step of extrusion, calibration in a cooled calibration chamber, and rolling at least partially performed by the device for final volume and shape treatment. For example, the calibration chamber can be cooled to 6-10 °C. The calibration chamber has a shape that determines the shape of the resulting composite product, such that as the material passes through the calibration chamber, the material is cooled without its shape deviating from the desired shape.

The pressing can take place e.g., in a press with a cooled press mould or in several presses. The cooling of the press mould or calibration chamber can be carried out e.g., using water as a cooling medium. The step comprising extrusion through the extrusion head, calibration, and rolling is particularly preferred for production of the composite made by the method of the invention. The extrusion and calibration will provide any desired shape to the composite material, e.g., a profile with a rectangular cross-section, and the calibration will also create a solidified crust on the surface of the composite due to cooling. The subsequent rolling ensures that the desired shape is maintained and preferably also that the material is further cooled to depth, since cooling during calibration may not be sufficient to completely cool the composite due to the high heat capacity. This can be followed, for example, by separating the composite to the required dimension to produce the final composite product.

Alternatively or additionally, degassing may be followed by at least one of the following steps, performed at least in part by the device for final volume and shape treatment:
- the mixture is transported to the first extrusion device and then it is separated;
- the mixture is transported to the second casting device into the first moulds;
- the mixture is transported to the press into the second moulds;
- the mixture is transported to the rolling first mill, then it is separated and cooled;
- the mixture is pulled in the form of filament in the third filament pulling device and subsequently cooled; and/or
- after partial cooling, the mixture is pulled by a second pulling mill to the resulting shape of the composite profile.

The method can be implemented by a device which comprises at least one dryer for drying and optionally for preheating the input raw materials, at least one batcher for the dried raw materials, e.g., a screw conveyor, a homogeniser for homogenising the raw materials, preferably tempered such that the material is delivered to the extruder slightly preheated, an extruder for melting a portion of the raw materials, a second batcher for the molten mixture, and a device for final volume and shape treatment. For example, there may be a hopper at the input of the device for the delivery of the input raw materials. The device may comprise, for example, one dryer for the binder and another for the filler, both of which pass through a mixing conveyor to the homogeniser, wherein each may have a regulatable feeder at the input, e.g., a calibrated rotary feeder, of the material in question adapted for precise batching. By regulating these feeders, it is then possible to regulate the ratio of the input raw materials. In the case of a common dryer, a separate batcher for the binder and filler may similarly be provided, e.g., a rotary batcher for the binder and a second rotary batcher for the filler, to allow regulation of the ratio of the input raw materials. For example, these batchers are located above the level of the dryers so that the material can fall freely from them into the corresponding dryer after batching.

The device may also comprise a common dryer to which two batchers lead to deliver the appropriate ratio of filler to binder, for example, these may be hoppers with a flap or screw conveyors for batching, preferably adapted to batch the required weight of the individual input raw materials. The extruder may be heated mainly by an electric heating element or by multiple heating elements, in particular because of the need to achieve higher temperatures than are usually achievable with water/air heat exchangers. For this reason, it is particularly preferred to slightly preheat the raw materials in the dryer and/or homogeniser, as the cost of heating with heat exchangers is normally lower than the cost of heating with electricity. The first batcher may be, for example, a conical screw feeder adapted to deliver a precise amount of raw materials to the extruder, preferably depending on the amount of material exiting the extruder as measured by a suitable, e.g., ultrasonic, sensor. The second batcher may be, for example, a batching extruder. The device preferably comprises at least two dryers, one for the filler and one for the binder. Preferably, the material is then transferred from the dryers by the mixing conveyor to the homogeniser. The filler and the binder may require different drying parameters (temperature, air flow, etc.), so it may be more preferred to dry them separately, for example also in the method of the invention described above. The material can then be transported from the dryers via common mixing conveyor, so the device does not need to be equipped with two separate conveyors leading to the homogeniser.

The homogeniser may be implemented, for example, as a bin or container provided with at least one shaft with blades for mixing the raw materials and provided with a batcher for regulated delivery of raw materials to the extruder. When two or more such shafts are used, these shafts are preferably parallel and the paths of their blades may intersect. The batcher of the homogeniser may be, for example, a flap and/or said screw feeder. Thanks to the use of the homogeniser in the device, or the use of homogenisation in the method of the invention, the settling of the input raw materials is prevented and its delivery to the extruder in a precise ratio is ensured. The resulting composite thus has the same properties throughout the entire volume or each piece.

The device is preferred in particular because it allows processing of waste raw materials which are otherwise difficult to use, that is both binder, especially if preferably composed of multiple types of thermoplastics, and filler, and also because all steps of the method of the invention can be performed within a single device. With respect to the method of the invention performed by the device, this device may further comprise means for dedusting the air in the dryer(s), means for heat recovery, etc.

The extruder preferably comprises an extruder input and a rotor comprising at least two sections with helices with different pitches. For example, the first section of the rotor comprises a helix having a first pitch and the second section, located further away from the input to the extruder, comprises a helix having a second pitch smaller than the first pitch. The first pitch can be, for example, 50-150 mm, the second pitch can be, for example, 0.3-0.75 times the first pitch, preferably half. The transition between the pitches can be immediate or gradual. An advantage of such extruder is that the first section ensures uniform charging of the raw materials and the smaller pitch in the second section ensures compression of the extruded material in connection with the increasing bulk density during melting. Preferably, the rotor further comprises a third section located further away from the input to the extruder than the second section and comprising a helix having a third pitch greater than the second pitch, for example the same as the first pitch. The third section, similar to the first, then ensures uniform transport of the molten mixture.

The device may further comprise a second batching extruder which delivers the mixture from the first extruder described above to the device for final volume and shape treatment of the composite, e.g., to an extrusion head, press, casting moulds, etc. Between the two extruders, the molten mixture may be transferred through a free environment wherein degassing occurs.

The extruder preferably comprises a rotor that is at one end mounted loosely. This loosely mounted rotor is preferably the rotor of the first extruder described above, in which the melting takes place and which may comprise said sections with differently pitched helices. Preferably, the loose mounting is at the end of the rotor remote from the input to the extruder. The loose mounting allows for radial deflection of the rotor, for example by at least 1-5 mm, for example in the case where an impurity or filler grain of a larger size, e.g., larger than 8 mm or larger than 10 mm, is present in the input raw materials.

Preferably, the device for final volume and shape treatment of the composite is provided with a first extrusion device with a separating device, or a second casting device into a first mould, or a press for pressing the mixture into a second pressing mould, or a first rolling mill with a separating device, or a third device for pulling the filament, or a second pulling mill. Most preferably the device comprises an extrusion head, a calibration chamber, and a rolling line, wherein preferably at least some of these components are cooled.

Preferably, the homogenised raw material batcher, i.e., the batcher at the input of the extruder, is a batcher with a regulatable feed rate, wherein it is adapted to regulate the feed rate depending on the amount of mixture passing through the extruder or device for final volume and shape treatment of the composite. For example, a sensor may be present downstream of the extruder or in the extruder or batching extruder for detecting the amount of material passing through the given location. For example, the weight or volume of the material can be sensed. The data from such sensor can be used, especially with use of a regulator or control unit, for feedback regulation of the homogenised raw material batcher such that a desired, preset amount of the composite material is delivered from the extruder to the device for final volume and shape treatment of the composite. Similar feedback may be used, for example, to regulate the delivery rate by the first extruder based on the amount of material being delivered into the batching extruder. Alternatively or additionally, the feedback control can also be used to regulate the drying intensity based on e.g., humidity of the air removed from the dryer, humidity of the input raw materials, etc. The regulated drying parameter can be, for example, air temperature, fan rotation speed, etc.

The degassing section may comprise at least one working chamber, in which the molten mixture passes through an external environment, with a water vapour exhaust.

The batching extruder may comprise at least one working section and at least one working segment, wherein it is usually composed exactly of one section, namely the transport section. The rotor is provided with a regulated drive provided with a bearing at the input end, and along the length thereof it is provided with a helix with one constant pitch and with an extrusion head at the output end.

### Description of the Drawings

A summary of the invention is further clarified using exemplary embodiments thereof, which are described with reference to the accompanying drawings, in which:

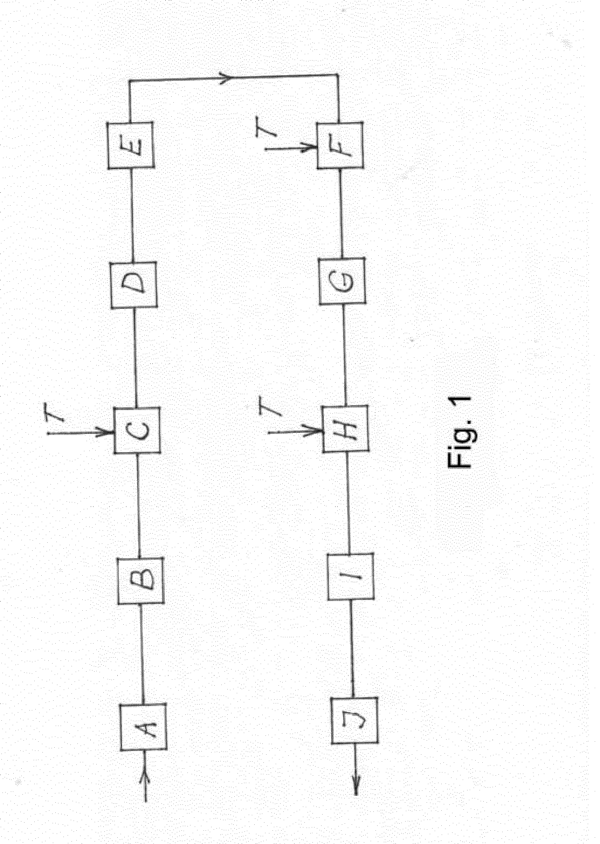

Fig. 1 shows a diagram of the technological process.

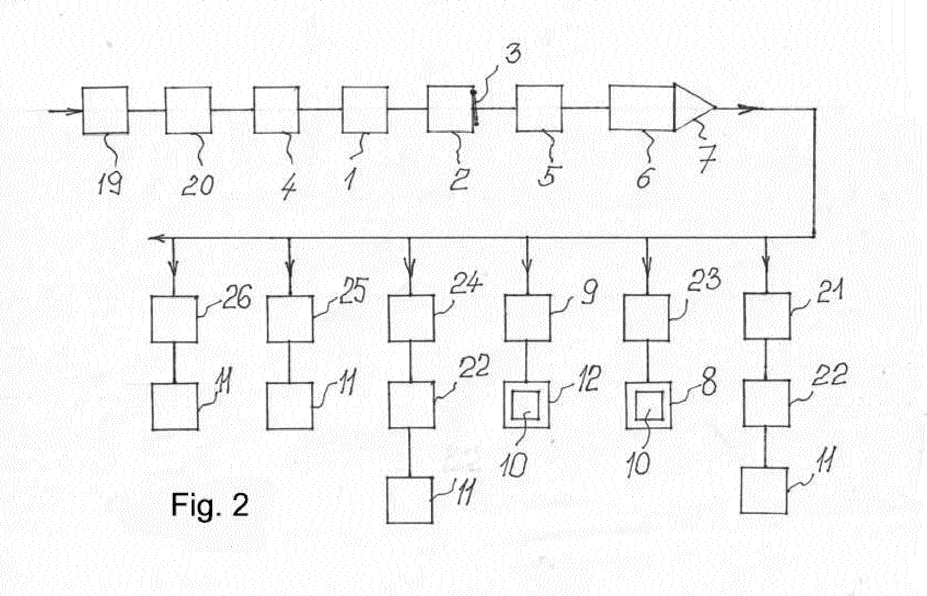

Fig. 2 shows a diagram of the assembly of the production device that may be used for performing the method of the invention.

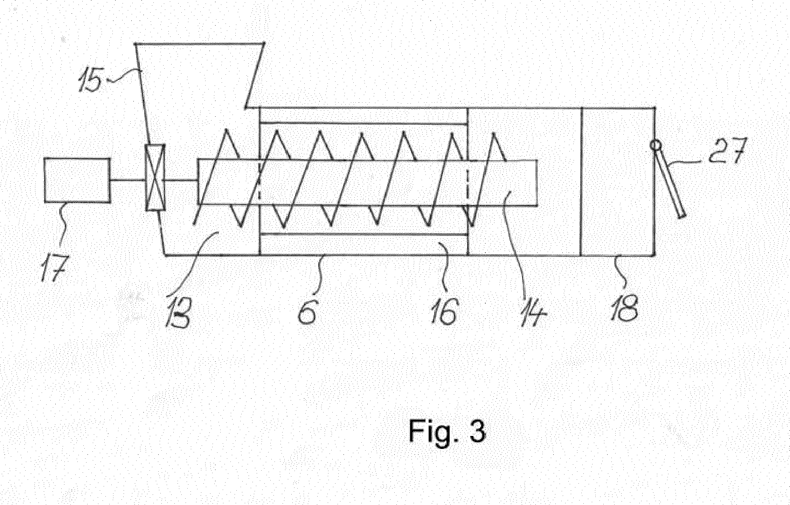

Fig. 3 schematically shows an extruder.
Fig. 4 is a schematic side view of a portion of the device comprising components for pre-preparation of the input raw materials.
Fig. 5 is a schematic side view of a portion of the device comprising portions for drying, homogenisation, and extrusion.
Fig. 6 is a schematic side view of a portion of the device comprising portions for extrusion and a device for final volume and shape treatment of the composite.
Fig. 7 is a schematic top view of the portion of the device shown in Fig. 4.
Fig. 8 is a schematic top view of the portion of the device shown in Fig. 5.
Fig. 9 is a schematic top view of the portion of the device shown in Fig. 6.

### Exemplary Embodiments of the Invention

There are many exemplary embodiments, and it is not possible to list them exhaustively within the scope of this text.

In a first exemplary embodiment, the composite based on waste thermoplastics contains 38 % by weight of a waste thermoplastic one-component binder in grain size of 10 mm and 58 % by weight of a filler made from recycled glass from photovoltaic panels of grain size of 5 mm, and 4 % by weight of a stabilising additive and dyes.

The method of production of the composite in the first exemplary embodiment is performed by first performing washing in a washer-cleaner 19, then drying and slight preheating of the input raw materials below the melting temperature of the processed raw materials, in two dryers 4, for the individual components of the composite, and thereby removing moisture from the material. This is followed by crushing the raw materials in two grinders 1 into the input fractions of the binder, followed by batching of the individual fractions by the batcher 2, which are then dried and preheated to the temperature of 50 to 300 °C, whereupon the individual fractions are simultaneously mixed and the mixture is homogenised in a homogeniser 5, from which the mixture proceeds to an extruder 6. This is followed by melting of the mixture at a temperature of 250 °C, wherein the molten mixture is simultaneously compressed and batched into a device for volume and shape treatment, that is, a second casting device 23 into first moulds 8, and then cooled.

The device for production of the composite in the first exemplary embodiment consists successively of two washers-cleaners 19, furthermore, two dryers 4 with preheating for each of the components of the composite mixture, further at least two grinders 1 for crushing and grinding the raw materials to the input fraction size, further at least two batchers 2 of fractions of the raw materials provided with a first discharge flap 3. This is followed by one one-rotor tempered homogeniser 5 for homogenising the raw materials, followed by one one-rotor extruder 6 for melting the mixture, followed by a second batcher 7 for batching the mixture into the second casting device 23 into the first moulds 8, followed by cooling 11.
The extruder 6 consists of a working portion composed of one hollow cylindrical stator 13 and one cylindrical rotor 14, composed of one segment with one variable pitch working section, namely a simultaneously feeding and compression and melting section. The stator 13 is provided with a filling hopper 15 at its input end and is provided along its length with one regulated heating element 16, wherein the cavity of the stator 13 is continuously tapered. The rotor 14 is provided with a regulated drive 17 provided with a bearing at the input end, and along its length it is provided with a helix with one gradually finer pitch, wherein the rotor 14 is mounted loosely at the output end. The extruder 6 is provided with an extrusion head 18 at the output end and a second controlled flap 27 for batching the mixture.

The composite based on waste thermoplastics in the second exemplary embodiment contains a mixture of 35 % by weight of multi-component waste thermoplastic binder in grain size of up to 15 mm, 50 % by weight of a half mixed filler from recycled glass from photovoltaic panels and recycled rubber from tyres in grain size of 5 mm, furthermore, 5 % by weight of slag also in grain size of 5 mm, 5 % by weight of ash, and 5 % by weight of a stabilising additive and dyes.

The method of production of the composite in the second exemplary embodiment is performed by first performing cleaning in a washer-cleaner 19, followed by penetration in a penetrator 20, then drying and slight preheating of the input raw materials below the melting temperature of the processed thermoplastics, in subdryers 4 for the individual components of the composite and thereby removing the moisture from the material, followed by crushing the raw materials in the grinder 1 into input fractions of binder up to 10 mm and filler up to 5 mm. This is followed by batching of the individual fractions with the batcher 2, which are then dried and preheated to a temperature of 200 °C. Subsequently, the individual fractions are mixed, and the mixture is homogenised in the homogeniser 5, from which the mixture proceeds to the extruder 6, where the mixture is melted at a temperature of 300 °C, wherein the molten mixture is simultaneously or subsequently compressed and batched into the device for final volume and shape treatment, that is, the mixture proceeds to a press 9 into second moulds 12 and subsequently the product is cooled.

The device for production of the composite in the second exemplary embodiment consists successively of multiple washers-cleaners 19, multiple penetrators 20, furthermore, multiple dryers 4 with preheating for each of the components of the composite mixture, further multiple grinders 1 for crushing and grinding the raw materials to the input fraction size, further of at least multiple batchers 2 of fractions of the raw materials provided with the first discharge flap 3, further of one two-rotor tempered homogeniser 5 for homogenisation of the raw materials. One one-rotor extruder 6 for melting the mixture and the second batcher 7 for batching the mixture into the device for final volume and shape treatment follow, and after the extruder 6, it is provided with the press 9 for pressing the product 10 into the second mould 12, followed by cooling 11.

The extruder 6 consists of a working portion composed of one hollow cylindrical stator 13 and one rotor 14, composed of one segment with one variable pitch working section, namely a simultaneously feeding and compression and melting section. The stator 13 is provided with a filling hopper 15 at its input end and with one regulated heating element 16 along its length, wherein the cavity of the stator 13 is continuously cylindrical. The rotor 14 is provided with a regulated drive 17 provided with a bearing at its input end and with a helix with one pitch along its length, wherein the rotor 14 is mounted loosely at the output end. The extruder 6 is at the output end provided with an extrusion head 18 and a second controlled flap 27 for batching the mixture.

In a third exemplary embodiment, the composite based on waste thermoplastics contains 50 % by weight of a waste thermoplastic one-component binder of grain size of up to 8 mm and 45 % by weight of a filler made from concrete of grain size of up to 5 mm and 5 % by weight of dyes.

The method of production of the composite in the third exemplary embodiment is performed by first performing, according to the degree of contamination, washing and/or cleaning in the washer-cleaner 19, followed by penetration in the penetrator 20 as needed, then drying and slight preheating of the input raw materials below the melting temperature of the processed thermoplastics, in one dryer 4, or in subdryers 4, for the individual components of the composite, and thereby removing the moisture from the material. The raw materials are then crushed in the grinder 1 into input fractions of binder up to 20 mm and filler up to 10 mm, followed by batching of the individual fractions by the batcher 2, which are then dried and preheated to a temperature of 50 to 300 °C, after which the individual fractions are mixed simultaneously. The mixture is homogenised in the homogeniser 5, from which the mixture proceeds to the extruder 6 where the mixture is melted at a temperature of 80 to 350 °C, wherein the molten mixture is simultaneously or subsequently compressed and batched into the device for final and volume treatment, i.e., into a first extrusion device 21, after which it is separated and cooled.

According to the third exemplary embodiment, the device for production of the composites consists successively of two washers-cleaners 19, one penetrator 20, furthermore, two dryers 4 with preheating for each of the components of the composite mixture, further two grinders 1 for crushing and grinding the raw materials to the input fraction size, two batchers 2 of fractions of the raw materials provided with the first discharge flap 3, further of one one-rotor tempered homogeniser 5 for homogenisation of the raw materials. This is followed by one one-rotor extruder 6 for melting the mixture, and a second batcher 7 for batching the mixture into the device for final volume and shape treatment, that is, into the first extrusion device 21 with a separating device 22, and finally followed by the cooling 11.

The extruder 6 consists of a working section formed by one hollow cylindrical stator 13 and one cylindrical rotor 14, formed by one segment with one variable pitch working section, namely a simultaneously feeding and compression and melting section, wherein the stator 13 is provided at its input end with the filling hopper 15 and one regulated heating element 16 along its length, wherein the cavity of the stator 13 has a diameter graded by three grades. The rotor 14 is provided with a regulated drive 17 provided with a bearing at the input end and it is provided with a helix with three gradually finer pitches along its length, wherein the rotor 14 is mounted loosely at the output end. The extruder 6 is provided with an extrusion head 18 at the output end and a second controlled flap 27 for batching the mixture.

Alternatively, the method of production of the composite according to the first exemplary embodiment may be modified such that the crushing takes place prior to washing, wherein the batcher subsequently batches the washed raw materials for drying. The preheating temperature is preferably a maximum of 90 °C. The final treatment is preferably performed by the pressing device instead of casting. The device according to the first exemplary embodiment is then preferably modified accordingly, so that the grinders 1 are positioned upstream of the washers-cleaners 19, downstream of which are the batchers. The second batcher 7 is preferably a batching extruder 35. The casting device is preferably replaced by the pressing device. The device in this modified first exemplary embodiment preferably comprises a degassing zone 34. The batching extruder 35 preferably comprises a working portion comprising one hollow cylindrical stator 13 and one cylindrical rotor 14, which comprises one segment with one working section with a constant helix pitch. The stator 13 is provided with the filling hopper 15 at its input end and with one regulated heating element 16 along its length, wherein the cavity of the stator 13 is constant. The rotor 14 is provided with a regulated drive 17 provided with a bearing at the input end, and it is provided with a helix with one constant pitch along its length, wherein the rotor 14 is mounted loosely at the output end. The batching extruder 35 is provided with the extrusion head 18 at the output end.

The composite according to the second exemplary embodiment above is preferably modified such that the rubber is replaced by foundry sand of grain size of 2 mm. In the method of production in the second exemplary embodiment, the crushing preferably takes place prior to cleaning and penetration is preferably not a part of the method. The preheating temperature is preferably 80 °C, the melting temperature 180 °C. The device according to the modified second exemplary embodiment then preferably does not contain the penetrator 20, wherein the grinders 1 are located upstream of the washers-cleaners 19.

The method according to the third exemplary embodiment is preferably also modified, wherein the crushing also takes place preferably before the optional washing and subsequent batching by the batchers. The preheating temperature is preferably a maximum of 100 °C. The device according to the third exemplary embodiment then preferably comprises two grinders 1 upstream of the washers-cleaners 19, wherein the batchers are preferably upstream of the dryers 4.

In another embodiment, the composite made by the method of the invention is a low-fill composite, for example containing 5-20 % filler, such as sand. For example, in some embodiments, the composite contains 5 % by weight of sand or aggregate and 95 % by weight of a thermoplastic binder, such as PVC. In another embodiment, it may contain, for example, 7 % by weight of sand and 3 % by weight of glass obtained from discarded photovoltaic panels, as well as 85 % by weight of a binder composed of a mixture of polyethylene and PET, and, furthermore, 5 % by weight of ferric oxide. In another embodiment, it may contain 15 % by weight of aggregate, 1 % by weight of a dye, and the remainder may be composed of a binder comprising polypropylene and polyethylene. A suitable melting temperature for such a binder would be, for example, 170-180 °C and the resulting composite would be suitable for rolling, e.g., for production of composite boards. The grain size of the filler in any of the embodiments described above is, for example, in an interval of up to 10 mm, preferably up to 8 mm. For example, the aggregate grain size may be 0.1-2 mm and the glass grain size 1-3 mm. Preferably at least half the weight of the filler has grain size greater than 0.1 mm. The grain size of the binder in any of the embodiments described above is preferably in an interval of up to 20 mm, for example, said PVC binder may have grain size of less than 15 mm. In all embodiments, the composite may contain, for example, up to 5 % of impurities or components other than those mentioned above.

In another embodiment, the composite made by the method of the invention is a high-fill composite, for example with a filler content of 50-75 %. For example, it may contain 75 % by weight of a filler composed of equal amounts of auto glass and foundry sand. The remaining 25 % may be composed of a binder, for example a mixture of polyolefins, or the composite may contain, for example, 3 % by weight of stabilising additives, dyes, or flame retardants such that the binder then makes up 22 % by weight. Alternatively, the high-fill composite may contain, for example, 50 or 55 % filler, such as ash, and 50 or 45 % binder, such as polypropylene.

In another embodiment, the composite may have a composition at the transition between low-fill and high-fill, for example, it may contain 20-50 % by weight of filler and the remainder is binder and optional other components. Thus, for example, the composite may contain 33 % by weight of building waste containing, for example, concrete, ceramics, and aggregate, 2 % by weight of ferric oxide, and 65 % by weight of a binder that comprises, for example, polyolefins, polypropylene, polyethylene, and PET, or any other thermoplastics, in any, for example, even unspecified, ratios. Alternatively, in another embodiment, the binder may contain a mixture of glass, sand, gravel, recycled tyre rubber, recycled ceramics, mixed building and demolition waste, concrete, slag, ash, etc. The content of such filler, the composition and content of the binder, and any additional components may be, for example, as in any other disclosed embodiment of the composite made by the method of the invention . Alternatively, in any embodiment, the filler may be composed of sand, aggregate, glass, building recyclates, bottom ash, and/or slag. It is also possible to use another material with the desired grain size and with firm grain that will not disintegrate during final volume and shape treatment of the composite. In some embodiments, the composite may be a medium or high-fill composite, i.e., having a filler content of at least 20 % by weight, with the remainder composed of binder and optionally the specified optional components.

In general, the filler content of the composite may be in the interval of 10-90 % by weight, preferably 5-90 % by weight, more preferably 5-75 % by weight. The binder content may be 10-90 %, more preferably 20-95 % by weight. The content of the stabilising additives, dyes, etc. may be, for example, 0-5 % by weight. The other features of the composite, such as the composition of the individual input raw materials, may be selected, for example, according to any of the embodiments above.

The method of the invention by which the composite may be produced, for example, according to any of the embodiments above, may comprise delivery of the input raw materials comprising thermoplastic binder having grain size of up to 20 mm, filler having grain size of up to 10 mm, and optional additional components. It may further comprise drying the input raw materials in at least one dryer 4, preheating the raw materials to a temperature below the melting temperature of the binder (in the dryer 4 and/or homogeniser 5), and homogenising the raw materials in the homogeniser 5. In another step, the raw materials are transported to the extruder 6, for example, by a screw batcher, wherein in the extruder 6 a part of the homogenised raw materials, i.e., particularly the binder, is melted under constant homogenisation to form a molten mixture, wherein the molten mixture is subsequently degassed and is delivered to the device for final volume and shape treatment of the composite. The stabilising additives and/or dye may already be added to some of the input raw materials. Preferably, they are added to the homogeniser 5.

The degassing step may be preferably performed by transporting the molten mixture through a free, open space - the degassing zone 34, i.e., with access to air, such that the water vapours may be released from the mixture. The device is then preferably provided with means for removal of these vapours. For example, in the device for final volume and shape treatment of the composite, a pressing step may take place optionally with cooling, extrusion, casting, rolling, separating, pulling, etc. In a particularly preferred embodiment, the device for final volume and shape treatment of the composite performs the final treatment step comprising extrusion with extrusion head that partially provides the desired cross-sectional shape to the extruded material, calibration in cooled calibration chamber that further adjusts the cross-section of the formed continuous profile to the desired shape and cools at least the surface of the material, and, furthermore, this step comprises rolling, preferably with cooling, to ensure that the resulting composite remains in the shape provided by the extrusion and calibration.

Preferably the method of the invention further comprises dedusting in the dryer 4. The dedusting may be carried out in particular by filtering the air carrying moisture away from the dryer 4 by means of an air filter. The captured dust is preferably returned to the input raw materials. Preferably, the method further comprises recovery of heat from the dryer 4, i.e., from the moisture carrying air. This heat is preferably delivered back to the method, especially for preheating the air for drying. The heating of the air for drying can be carried out e.g., by contacting the air with a heat exchanger, preferably a water-air exchanger. For example, water can be heated by a gas boiler, e.g., up to 110 °C, or it can be delivered from outside, e.g., from a heating plant or waste heat source.

The temperature in the dryer 4 and/or the homogeniser 5, preferably both, may be, for example, 50-110 °C, for example 80 °C. The homogenised raw materials then enter the extruder 6 preferably preheated. The temperature in the extruder 6 may be, for example, 70-350 °C, in particular 70-260 °C, depending in particular on the type of binder used, for example, the temperature may be 80 °C for a PVC binder, 200 °C for a binder composed of multiple different thermoplastics, etc. The extruder 6 is heated, for example, by an electric heating element, preferably by multiple independently regulated heating elements.

Preferably, in the method of the invention, the amount of raw materials delivered from the homogeniser 5 to the extruder 6 is regulated by a feedback circuit based on data containing information about the amount of molten mixture passing through the extruder 6 or other steps downstream of the extruder 6. Furthermore, preferably, the extrusion rate of the extruder 6, i.e., the amount of material dispensed by the extruder 6 per unit time, e.g., the rotational speed of the rotor 14 of the extruder 6, may be regulated by the feedback circuit based on data containing information about the amount of molten mixture passing through the next steps downstream of the extruder 6, e.g., the amount delivered to the device for final volume and shape treatment of the composite. For example, the method of the invention may be performed by the device described in the embodiments above or in embodiments to be described below. The device may be modified with respect to the method it performs. Therefore, for example, if the device comprises a press, the method may comprise a pressing step, if the device comprises a casting mould, the method may comprise casting the resulting composite, if the device comprises a grinder of the input material, the method may comprise grinding, e.g., of a binder, etc.

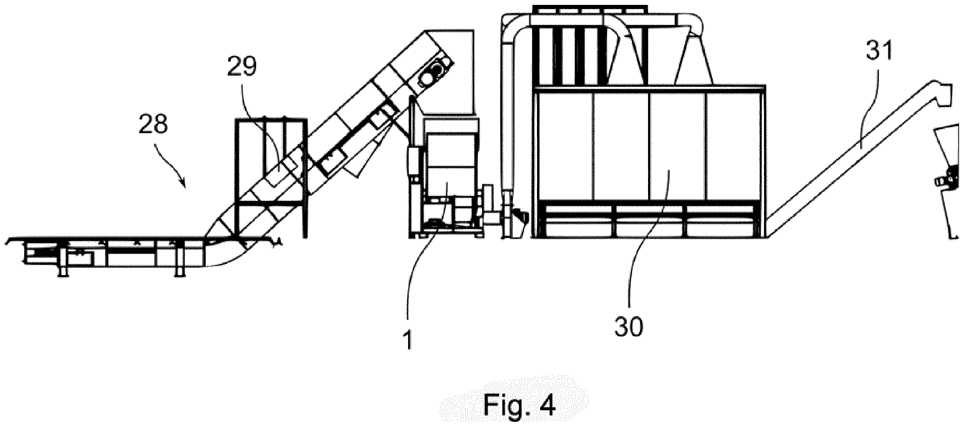

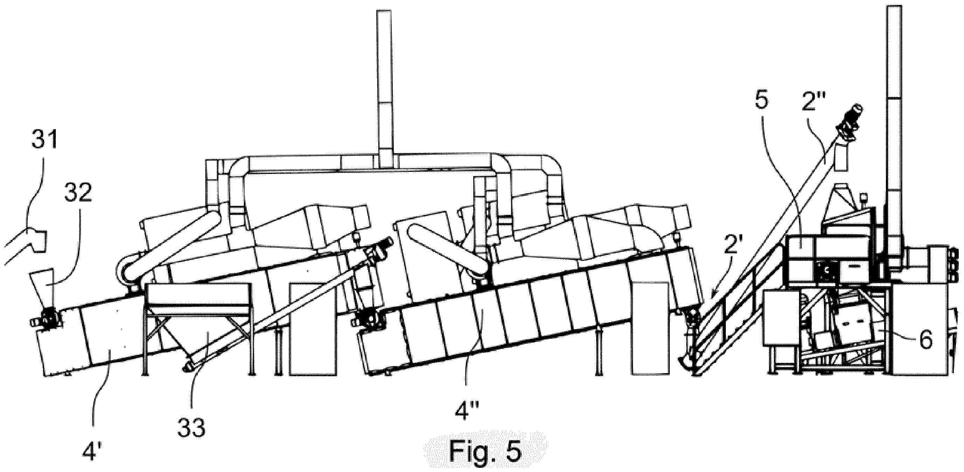

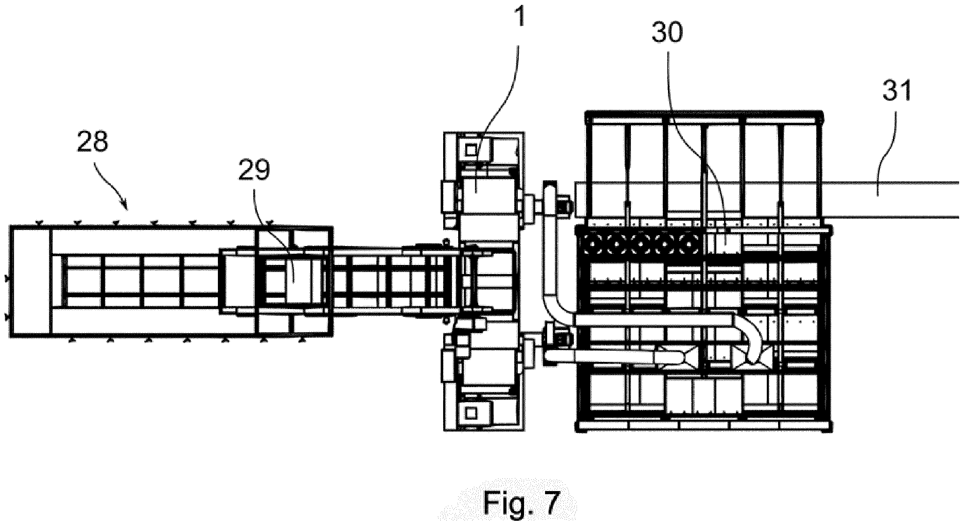

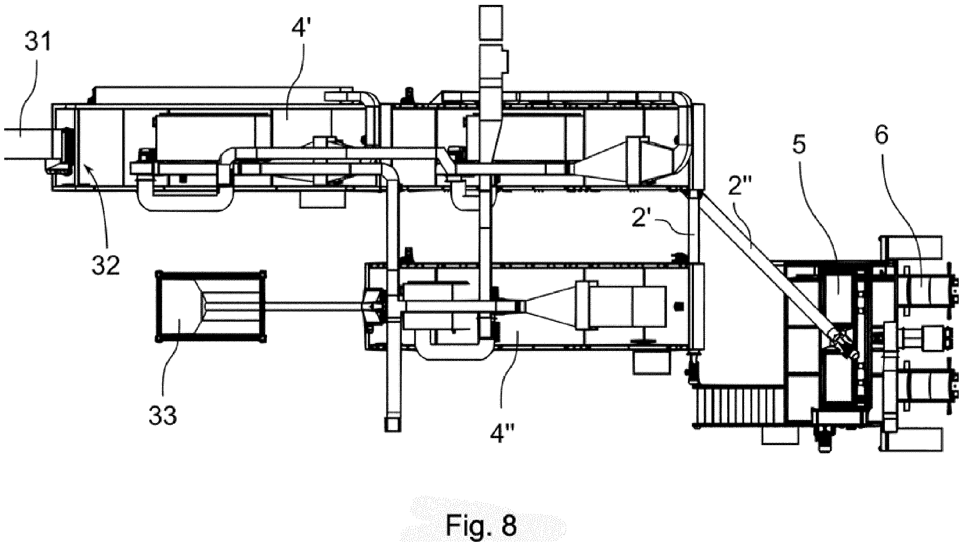

The device for production of the composite by the method of the invention according to the embodiment shown in Figs. 4-9, comprises optional components for the pre-preparation of the input raw materials (see Figs. 4 and 7), namely a binder input conveyor 28, e.g., a chain conveyor, and a magnetic binder separator 29 with grinders 1, a binder silo 30, and a binder conveyor 31. Furthermore, the components for the pre-preparation comprise a filler hopper 33 visible in Figs. 5 and 8. Furthermore, the device comprises two belt dryers 4, namely one binder dryer 4' provided with a binder batcher 32 and one filler dryer 4" (see Figs. 5 and 8). The dryers 4', 4"_ are connected to a hot water supply and comprise a fan to create a stream of air heated by the water-air heat exchanger. Furthermore, the device comprises a homogeniser 5, to which the raw materials from the dryers 4', 4" are delivered, e.g., by screw conveyors. In the embodiment shown, a first batcher 2' is used for mixing and a first batcher 2" for elevating the raw materials for subsequent delivery to the homogeniser 5. The homogeniser 5 contains means for mixing the input raw materials, for example rotary blades or a screw. The homogeniser 5 is preferably also connected to the hot water supply. Downstream of the homogeniser 5, in the direction of passage of the raw materials through the device, a conical screw feeder is located, through which the mixture of the input raw materials is batched into the extruder 6, or a pair of extruders 6 or the extruder 6 with a pair of rotors 14.

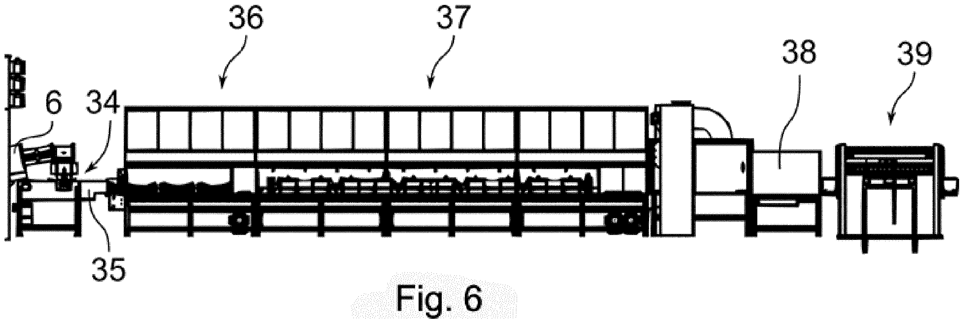

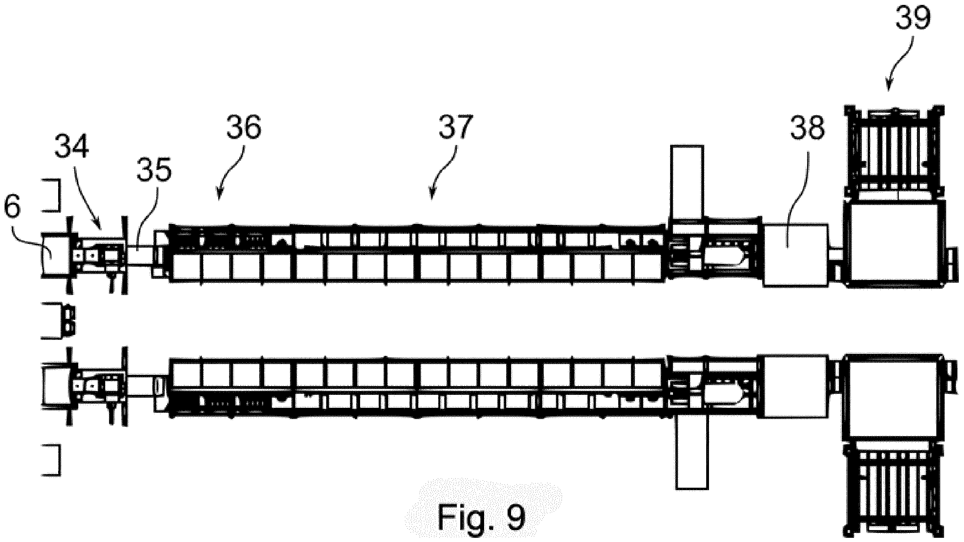

The extruder 6 comprises a rotor 14 and a stator 13, wherein the stator 13 defines an input to the extruder 6, a space for mounting the rotor 14, a space for passing the mixture around the rotor 14, and an exit from the extruder 6. The rotor 14 is preferably mounted loosely at its rear end and comprises three helical sections. The first section and the third section have the same first helix pitch and are used to feed the material. The middle, second section has a smaller second helix pitch than the first pitch and is used to compress the material during melting. The heating of the space for passage of the mixture around the rotor 14 is preferably performed by an electric heating element located along the rotor 14 or multiple such elements. Downstream of the extruder 6, the batching extruder 35 is located, representing here a second batching extruder 7, wherein between these extruders the molten mixture passes through the degassing zone 34 with an open environment for its degassing. The batching extruder 35 may comprise a rotor 14 with a helix (screw), a belt conveyor, etc., and is used in particular to transport degassed material to the device for the final volume and shape treatment (see Figs. 6 and 9) which, in the embodiment shown, comprises an extrusion head, a calibration chamber 36, a rolling line with a cooling zone 37, and a cutting device, in the shown embodiment, a saw 38. The extrusion head, the calibration chamber 36 and/or the rolling line may be cooled, e.g., by water, preferably they are all cooled. For example, the cutting device may cut with compressed air and cutting tools, water cutting, etc., may also be used. For example, a unit 39 for palletising the resulting composite product may be provided downstream of device for final volume and shape treatment. In the case of using multiple extruders 6 or extruder 6 with multiple rotors 14, the device for final volume and shape treatment may comprise each of the above components from the degassing zone 34 to the unit 39 for palletising twice.

Preferably, the device further comprises a unit for recovering heat from the air removed from the dryers 4, and optionally also heat removed from the resulting composite material during cooling. Furthermore, the dryers 4 preferably comprise a dust filter or filters and means for returning the captured dust, from the air removed from the dryers 4 back to the method, e.g., to the material in the dryers 4, or to the homogeniser 5, etc. In some embodiments, the device may comprise a plurality of different devices for the final volume and shape treatment. For example, the device of Figs. 4-9 may alternatively comprise a press through which one portion of the produced composite material passes and an extrusion head followed by the calibration chamber 36 and the rolling line. For example, in a device with multiple extruders 6, each extruder 6 (or batching extruder 35) may dispense material for a different final volume and shape treatment.

In alternative embodiments, the device for final volume and shape treatment may comprise the first extrusion device 21, the second casting device 23, the press 9, the first rolling mill 24, the third filament pulling device 25, second pulling mill 26, or a combination thereof. The batching extruder 35, or other device providing delivery of the molten degassed mixture, may be adapted for batching a predetermined amount into the device for final volume and shape treatment, for example, delivery into a weighted casting or press mould. For example, it can be stopped after the required amount has been delivered or it can contain a closing flap. In another alternative embodiment, the components of the device may not be the disclosed components for the pre-preparation of the input raw materials or their bins. The device may, for example, start with hoppers for filler and binder at the beginning of the corresponding dryers 4 or bins for raw materials, where the sorting of the raw materials, their grinding, etc. may take place in other devices. In addition to multiple parallel dryers 4 for different input raw materials, the device may alternatively or additionally comprise multiple dryers 4 located in series.

Preferably, the device comprises a regulator or control unit or multiple regulators or control units, wherein it comprises suitable sensors for delivering data to such a control unit. For example, sensors can monitor the amount of material passing through a certain portion of the device, and based on this data, the control unit regulates the delivery of the material in another portion of the device. Thus, for example, if less material than required is delivered at the output from the batching extruder 35, the control unit may adjust the feed rate of the material from the homogeniser 5 to the extruder 6, or the delivery rate of the material to the dryers 4 and from the dryers 4 to the homogeniser 5.

Preferably, the input of the raw materials into the dryers 4 is provided by regulatable rotary feeders that provide precise batching of the input raw materials and thus their ratio and thus the properties of the resulting composite. The screw conveyor (the first batcher 2) is preferably used for the transport from the dryers 4 to the homogeniser 5, which does not need to be regulatable and the raw materials can be freely delivered from it, e.g., by free-falling, to the homogeniser 5. At the output of the homogeniser 5 there is preferably a closing flap downstream of which there is said conical screw feeder, preferably regulated by feedback according to the amount of material delivered by the extruder 6, wherein this feeder takes the desired amount of the homogenised raw materials and delivers it to the extruder 6.

In any embodiment, the homogeniser 5 may comprise, for example, one rotor, e.g., a shaft with blades, or multiple such rotors. The blades nay be preferably adjustable, for example with respect to the composition of the input raw materials. In alternative embodiments, the device may comprise a single dryer 4 for all input raw materials or even more than two dryers 4, etc. In some embodiments, the extruder 6 may also comprise a plurality of rotors 14, for example arranged in parallel side by side. Alternatively, the extruder 6 may comprise a rotor 14 with a single section or two sections, or it may be composed of multiple extruders or multiple rotors 14 that may have different helix pitches to provide said compression.

### Industrial applicability

The composite made by the method of the invention may be used in a number of fields, in processing of various waste into practically usable products. In the building industry as various blocks, floors of workshops, and various plants, for pavements, road surfaces, walls, fences, roofing, target and partition walls of shooting ranges, noise barriers, barriers against drifts, protective walls and cells against infantry weapons, as a construction material for building and mechanical purposes, in the construction of halls and steel structures, in the production of tanks, for urban furniture, as part of the armouring of military equipment...

### List of Reference Numbers

| | | | | | |
|---|---|---|---|---|---|
| 1 | grinder | 15 | hopper | 33 | filler hopper |
| 2 | first batcher | 16 | element | 34 | degassing zone |
| 2' | first batcher | 17 | drive | 35 | batching extruder |
| 2" | first batcher | 18 | head | 36 | calibration chamber |
| 3 | first flap | 19 | washer-cleaner | 37 | cooling zone |
| 4 | dryer | 20 | penetrator | 38 | saw |
| 4' | dryer | 21 | first device | 39 | unit for palletising |
| 4" | dryer | 22 | separator | A | washing/cleaning |
| 5 | homogeniser | 23 | second device | B | penetration |
| 6 | extruder | 24 | first mill | C | drying |
| 7 | second batcher | 25 | third device | D | grinding |
| 8 | first mould | 26 | second mill | E | batching |
| 9 | press | 27 | second flap | F | preheating |
| 10 | product | 28 | binder input conveyor | G | homogenisation |
| 11 | cooling | 29 | magnetic separator | H | extrusion |
| 12 | second mould | 30 | binder silo | I | finalisation |
| 13 | stator | 31 | binder conveyor | J | cooling |
| 14 | rotor | 32 | binder batcher | T | heat |

## Claims

1. A method of production of a composite based on waste thermoplastics, the method comprising a step of delivering input raw materials comprising 10-90 % by weight of a waste thermoplastic binder of grain size of up to 20 mm, 10-90 % by weight of a filler of grain size of up to 10 mm, and optional additional components, wherein the filler is selected from a group comprising recycled waste and container glass, or recycled glass from photovoltaic panels, sand, gravel, recycled tyre rubber, recycled ceramics, mixed building and demolition waste, concrete, slag, ash, or a mixture thereof, wherein the method further comprises steps of drying the input raw materials in at least one dryer (4), preheating the raw materials to a temperature below melting temperature of the binder, and homogenising the dried raw materials in a homogeniser (5), wherein the raw materials are subsequently transported to an extruder (6), wherein in the extruder (6), the binder is melted to form a homogenised molten mixture, wherein the molten mixture is subsequently degassed and delivered to a device for final volume and shape treatment of the composite.

2. The method of production of claim 1, **characterised in that** at least half of the weight of the filler is composed of filler with grain size of at least 0.1 mm.

3. The method of production of any one of claims 1 to 2, **characterised in that** the drying step is carried out by means of air flow around the input raw materials, wherein before the air is removed, the air is dedusted and the captured dust is subsequently returned to the input raw materials.

4. The method of production of claim 3, **characterised in that** it comprises a step of heat recovery from the removed air.

5. The method of production of any one of claims 1 to 4, **characterised in that** the melting of the mixture is carried out at a temperature of 70-350 °C.

6. The method of production of any one of claims 1 to 5, **characterised in that** it further comprises:
• a step of extrusion, calibration in a cooled calibration chamber, and rolling at least partially performed by the device for final volume and shape treatment; and/or
• a step of pressing at least partially performed by the device for final volume and shape treatment.

## Patentansprüche

1. Ein Verfahren zur Herstellung eines Verbundwerkstoffes auf der Basis von Abfallthermoplasten, wobei das Verfahren umfasst
einen Schritt des Zuführens von Eingangsrohmaterialien, die 10-90 Gew.-% eines thermoplastischen Abfallbindemittels mit einer Korngröße von bis zu 20 mm, 10-90 Gew.-% eines Füllstoffs mit einer Korngröße von bis zu 10 mm und optionale zusätzliche Komponenten umfassen, wobei der Füllstoff aus einer Gruppe ausgewählt ist, die recyceltes Abfall- und Behälterglas oder recyceltes Glas aus Photovoltaikplatten, Sand, Kies, recycelten Reifenkautschuk, recycelte Keramik, gemischte Bau- und Abbruchabfällen, Beton, Schlacke, Asche oder eine Mischung davon umfasst, wobei das Verfahren ferner die Schritte des Trocknens der Eingangsrohmaterialien in mindestens einem Trockner (4), des Vorwärmens der Rohmaterialien auf eine Temperatur unterhalb der Schmelztemperatur des Bindemittels und des Homogenisierens der getrockneten Rohmaterialien in einem Homogenisator (5) umfasst, wobei die Rohmaterialien anschließend zu einem Extruder (6) transportiert werden, wobei im Extruder (6) das Bindemittel zu einem homogenisierten geschmolzenen Gemisch aufgeschmolzen wird, wobei das geschmolzene Gemisch anschließend entgast und einer Vorrichtung zur Endvolumen- und Formbehandlung des Verbundwerkstoffes zugeführt wird.

2. Das Verfahren zur Herstellung nach Anspruch 1, **dadurch gekennzeichnet, dass** mindestens eine Hälfte des Gewichts des Füllstoffs aus Füllstoff mit einer Korngröße von mindestens 0,1 mm besteht.

3. Das Verfahren zur Herstellung nach einem der Ansprüche 1 bis 2, **dadurch gekennzeichnet, dass** der Schritt des Trocknens mittels Luftstrom um die Eingangsrohmaterialien erfolgt, wobei, vor dem Entfernen der Luft, die Luft entstaubt und anschließend der eingefangene Staub wieder in die Eingangsrohmaterialien zurückgeführt wird.

4. Das Verfahren zur Herstellung nach Anspruch 3, **dadurch gekennzeichnet, dass** es einen Schritt der Wärmerückgewinnung aus der entfernten Luft umfasst.

5. Das Verfahren zur Herstellung nach einem der Ansprüche 1 bis 4, **dadurch gekennzeichnet, dass** das Schmelzen der Mischung bei einer Temperatur von 70-350 °C durchgeführt wird.

6. Das Verfahren zur Herstellung nach einem der Ansprüche 1 bis 5, **dadurch gekennzeichnet, dass** es ferner umfasst:
• einen Schritt der Extrusion, der Kalibrierung in einer gekühlten Kalibrierkammer und des Walzens zumindest teilweise durch die Vorrichtung zur Endvolumen- und Formbehandlung; und/oder
• einen Schritt des Pressens zumindest teilweise durch die Vorrichtung zur Endvolumen- und Formbehandlung.

## Revendications

1. Un procédé pour la production d'un composite à base de déchets thermoplastiques, le procédé comprenant
une étape de distribution de matières premières d'entrée comprenant 10 à 90 % en poids d'un liant de déchets thermoplastiques de taille de grain allant jusqu'à 20 mm, 10 à 90 % en poids d'une charge de taille de grain allant jusqu'à 10 mm, et des composants supplémentaires facultatifs, où la charge est choisie dans un groupe comprenant du verre de récipient et de déchets recyclé, ou du verre recyclé provenant de panneaux photovoltaïques, du sable, du gravier, du caoutchouc de pneu recyclé, des céramiques recyclées, des déchets de bâtiment et de démolition mélangés, du béton, du laitier, des cendres, ou un mélange de ceux-ci, où le procédé comprend en outre des étapes de séchage des matières premières d'entrée dans au moins un séchoir (4), de préchauffage des matières premières à une température inférieure à la température de fusion du liant, et d'homogénéisation des matières premières séchées dans un homogénéisateur (5), où les matières premières sont ensuite transportées vers une extrudeuse (6), où dans l'extrudeuse (6), le liant est fondu pour former un mélange fondu homogénéisé, où le mélange fondu est ensuite dégazé et délivré à un dispositif pour un traitement de volume et de forme final du composite.

2. Le procédé de production selon la revendication 1, **caractérisé en ce qu'**au moins la moitié du poids de la charge est composée d'une charge avec une taille de grain d'au moins 0,1 mm.

3. Le procédé de production selon l'une quelconque des revendications 1 à 2, **caractérisé en ce que** l'étape de séchage est réalisée au moyen d'un flux d'air autour des matières premières d'entrée, où avant l'élimination de l'air, l'air est dépoussiéré et la poussière capturée est ensuite renvoyée aux matières premières d'entrée.

4. Le procédé de production selon la revendication 3, **caractérisé en ce qu'**il comprend une étape de récupération de chaleur à partir de l'air retiré.

5. Le procédé de production selon l'une quelconque des revendications 1 à 4, **caractérisé en ce que** la fusion du mélange est effectuée à une température de 70 à 350 °C.

6. Le procédé de production selon l'une quelconque des revendications 1 à 5, **caractérisé en ce qu'il** comprend en outre :
• une étape d'extrusion, d'étalonnage dans une chambre d'étalonnage refroidie, et de laminage au moins partiellement effectué par le dispositif pour un traitement de volume et de forme final ; et/ou
• une étape de pression au moins partiellement effectuée par le dispositif pour un traitement de volume et de forme final.
